# EUROPÄISCHE PATENTSCHRIFT

(11) **EP 2 599 171 B1**
(45) Veröffentlichungstag und Bekanntmachung des Hinweises auf die Patenterteilung: **04.12.2019**
(21) Anmeldenummer: 11748907.0
(22) Anmeldetag: 14.07.2011
(51) Int. Cl.: H01S 3/02, H01S 3/086, G02B 7/182, H01S 3/06, H01S 3/081, H01S 3/0941

(54) **FIXIEREN EINES IN ZWEI RAUMRICHTUNGEN JUSTIERBAREN OPTIKHALTERS MIT EINEM SCHRUMPFENDEN KLEBER**
FIXING AN OPTICS HOLDER, WHICH CAN BE ADJUSTED IN TWO DIRECTIONS IN SPACE, WITH AN ADHESIVE THAT SHRINKS
FIXATION D'UN SUPPORT D'OPTIQUE AJUSTABLE DANS DEUX DIRECTIONS SPATIALES À L'AIDE D'UN ADHÉSIF RÉTRACTABLE

(30) Priorität: 29.07.2010 DE 102010038662
(43) Veröffentlichungstag der Anmeldung: 05.06.2013
(73) Patentinhaber: JENOPTIK Optical Systems GmbH, 07745 Jena (DE)
(72) Erfinder: HEIDECKE, Thomas, 99425 Weimar (DE)
(74) Vertreter: Waldauf, Alexander
(86) Internationale Anmeldenummer: PCT/EP2011/062070
(87) Internationale Veröffentlichungsnummer: WO 2012/013512

(56) Entgegenhaltungen:
- WO-A1-2011/040290
- DE-A1- 3 236 915
- DE-A1- 19 805 849
- US-A1- 2006 280 221
- LU Y F ET AL: "Highly efficient Nd:GdVO4/BiBO laser at 456nm under direct 880nm diode laser pumping", OPTICS COMMUNICATIONS, NORTH-HOLLAND PUBLISHING CO. AMSTERDAM, NL, Bd. 282, Nr. 24, 15. Dezember 2009 (2009-12-15), Seiten 4793-4795, XP026718734, ISSN: 0030-4018, DOI: 10.1016/J.OPTCOM.2009.09.045 [gefunden am 2009-09-30]

## Beschreibung

Die vorliegende Erfindung betrifft ein Verfahren zum Justieren eines optischen Elementes und eine Optikanordnung mit einem Optikhalter, der ein optisches Element haltert.

Bei Optikanordnungen, wie zum Beispiel einem Laser, ist es häufig erforderlich, ein optisches Element (wie zum Beispiel einen Spiegel) zu justieren. Dazu werden Optikhalter verwendet, die feinwerktechnisch aufwendig herzustellen sind. Beispielsweise weisen sie zumindest zwei gegeneinander bewegbare Elemente mit Justierschrauben auf, um die gewünschte Positionierung einstellen zu können.

Solche Optikhalter sind groß, schwer und teuer in der Herstellung. Ein Fixieren von Optiken bzw. Optikhaltern mittels Klebeverbindungen ist z.B. bekannt aus US 2006/0280221 A1, DE 3236915 A1 und DE 19805849 A1.

Ausgehend hiervon ist es Aufgabe der Erfindung, ein Verfahren zum Justieren eines optischen Elementes bereitzustellen, mit dem kostengünstig eine dauerhafte Justierung mit hoher Genauigkeit möglich ist.

Die Aufgabe wird gelöst durch ein Verfahren zum Justieren eines optischen Elementes, mit den Schritten:
a) Bereitstellen eines Optikhalters mit einer einen Kontaktbereich aufweisenden Unterseite und Bereitstellen einer Grundplatte mit einer Vertiefung, die eine einen Auflagebereich aufweisenden Wandung umfaßt, wobei Kontaktbereich und Auflagebereich so ausgebildet sind, daß der Optikhalter bei bestehendem Kontakt zwischen Kontakt- und Auflagebereich um mehr als eine Raumrichtung (insbesondere um alle drei Raumrichtungen) zum Einstellen einer gewünschten oder vorbestimmten Positionierung drehbar ist und ein Hohlraum (bzw. Zwischenraum) zwischen der Unterseite des Optikhalters und einem Boden der Vertiefung vorliegt, wobei die Vertiefung als Sackloch ausgebildet ist,
b) Fixieren eines optischen Elementes in dem Optikhalter,
c) Einfüllen eines aushärtbaren Klebemittels in den Hohlraum.
d) Aufsetzen des Optikhalters mit seinem Kontaktbereich auf den Auflagebereich der Vertiefung,
e) Einstellen der vorbestimmten Positionierung durch Drehen des auf dem Auflagebereich sitzenden Optikhalters, und
f) Fixieren des Optikhalters in der vorbestimmten Positionierung durch Aushärten des Klebemittels, wobei beim Aushärten ein Schrumpfen stattfindet, wodurch der Kontaktbereich dauerhaft gegen den Auflagebereich gedrückt wird.

Mit diesem Verfahren ist es möglich, in einfachster Art und Weise die gewünschte Justierung zu erzielen und dauerhaft aufrecht zu erhalten.

Aufgrund des Schrittes f) entsteht neben der formschlüssigen Verbindung, die durch das Klebemittel bzw. den Klebstoff selbst gebildet wird, zusätzlich eine kraftschlüssige Verbindung zwischen dem Kontaktbereich und dem Auflagebereich. Dies führt z.B. zu dem Vorteil, daß beim Aushärten des Klebemittels der Optikhalter sofort durch den genannten Kraftschluß in seiner Position fixiert wird, und zwar auch dann, wenn das Klebemittel einen über das Klebemittelvolumen inhomogenen Schrumpf aufweist. Dadurch wird eine Dejustage, die beim Aushärten des Klebemittels bei bekannten Verfahren auftritt, vermieden.

Ein weiterer Vorteil liegt darin, daß beim Nachhärten des Klebers, das innerhalb von Minuten bis Monaten nach dem Aushärten auftritt, der Optikhalter dauerhaft durch den Kraftschluß in seiner Position fixiert wird, und zwar auch dann, wenn das Klebemittel beim Nachhärten einen über das Klebemittelvolumen inhomogenen Schrumpf aufweist. Dadurch wird eine allmähliche Dejustage, die beim Nachhärten eines Klebemittels bei bekannten Verfahren auftritt, vermieden.

Ferner ist vorteilhaft, daß die Position des optischen Elementes nicht von dem konkreten Betrag des Volumenschrumpfes des Klebemittels abhängt, wobei der Volumenschrumpf einiger Klebemittel schlecht reproduzierbar ist. Dadurch ist zwar die Kraft, die den Kraftschluß bewirkt, bei Einsatz eines solchen Klebemittels nicht sehr gut reproduzierbar. Dies hat jedoch bei dem erfindungsgemäßen Verfahren keine negativen Auswirkungen auf die Langzeitstabilität der Justageposition.

Bei dem erfindungsgemäßen Verfahren beginnt in vorteilhafter Weise somit der Kraftschluß schon beim Aushärten und ist im Gegensatz zu bekannten Klebeverfahren permanent. Dadurch kann keine plötzliche Dejustage auftreten, weder beim Abnehmen z.B. eines Justagehalters vom Optikhalter, noch bei später auftretenden mechanischen Erschütterungen.

Durch den Hohlraum wird sichergestellt, daß der Kontaktbereich zwischen der Unterseite des Optikhalters und der Grundplatte minimiert werden kann. Der Flächenkontakt kann somit so gering wie möglich sein. Dies ist von Vorteil, da dadurch die Kraft, welche die kraftschlüssige Verbindung bewirkt, auf eine geringe Fläche einwirkt. Dadurch entsteht ein hoher Anpreßdruck, so daß der Kraftschluß sehr stabil ist.

Erfindungsgemäß kann die Fläche, auf der der Kontaktbereich dauerhaft gegen den Auflagebereich gedrückt wird, kleiner gewählt werden als die Fläche, auf der das Klebemittel die Unterseite des Kontaktbereiches des Optikhalters oder die Fläche in der Vertiefung (insbesondere ihre Grundfläche) benetzt. Hierunter wird insbesondere verstanden, daß die Fläche, in der der Kontaktbereich dauerhaft gegen den Auflagebereich gedrückt wird, um zumindest den Faktor 3 oder um zumindest eine Größenordnung (z.B. Faktor 10, 100, 1000, etc.) kleiner ist als die mit dem Klebemittel benetzte Fläche an der Unterseite des Optikhalters bzw. der Vertiefung. Dadurch ist der Anpreßdruck im Auflagebereich wesentlich größer als die pro Fläche wirkende Zugkraft an den Grenzflächen des Klebemittels und des Optikhalters bzw. der Vertiefung. Somit kann es nicht zum Abriß des Klebers von einer Fläche kommen und trotzdem wird ein hoher Anpreßdruck im Auflagebereich erreicht.

Als Klebemittel kann insbesondere ein mittels UV-Strahlung und/oder ein wärmeaushärtbarer Kleber verwendet werden.

So kann im Schritt f) das Klebemittel durch Beaufschlagen mit UV-Strahlung ausgehärtet werden.

Insbesondere kann im Schritt f) die UV-Strahlung durch eine sich bis zum Hohlraum erstreckende Öffnung auf das Klebemittel gerichtet werden.

Ferner können bei dem erfindungsgemäßen Verfahren im Schritt a) der Optikhalter und die Grundplatte so bereitgestellt werden, daß der Auflagebereich und/oder der Kontaktbereich segmentiert ausgebildet werden/wird. So kann z.B. der Kontaktbereich drei Segmente aufweisen, die auf dem Auflagebereich sitzen. Damit kann eine statisch bestmöglich bestimmte 3-Punkt-Auflage realisiert werden.

Durch die segmentierte Ausbildung des Auflagebereiches und/oder des Kontaktbereiches kann eine sich bis zum Hohlraum erstreckende Öffnung bereitgestellt werden. Diese Öffnung kann z.B. im Schritt f) dazu genutzt werden, um durch diese Öffnung das Klebemittel mit UV-Strahlung zu beaufschlagen.

Ferner kann bei dem erfindungsgemäßen Verfahren im Schritt f) das Klebemittel thermisch ausgehärtet werden.

Bei dem erfindungsgemäßen Verfahren kann das aushärtbare Klebemittel so in den Hohlraum eingefüllt werden, daß es sowohl mit der Unterseite des Optikhalters (aber nicht mit dem Kontaktbereich der Unterseite) und der Vertiefung (aber nicht mit dem Auflagebereich der Vertiefung) im Kontakt steht, so daß bei einem Aushärten die gewünschte Fixierung der vorbestimmten Positionierung des Optikhalters erzielt wird.

Ferner kann zusätzlich zwischen dem Kontakt- und dem Auflagebereich ein zweites Klebemittel angeordnet werden, das nach dem Schritt e) ausgehärtet wird. Damit wird eine weitere Verbesserung der Fixierung des Optikhalters erzielt.

Bei dem Verfahren kann im Schritt a) der Auflagebereich als Fase der Vertiefung ausgebildet werden. Die Fase kann sehr klein sein, um die mechanische Kontaktfläche zu minimieren, es ist sogar eine scharfe Kante möglich. Die Auflage ist dann z.B. entweder streifen- oder linienförmig.

Ferner kann bei dem erfindungsgemäßen Verfahren im Schritt a) der Auflagebereich als Teil einer Hohlkugel ausgebildet werden. Damit wird erreicht, daß bei bestehendem Kontakt zwischen Kontakt- und Auflagebereich der Optikhalter um mehr als eine Raumrichtung zum Einstellen der gewünschten Positionierung drehbar ist.

Ferner kann bei dem erfindungsgemäßen Verfahren der Kontaktbereich kugelförmig oder als Teil oder Teile einer Kugel ausgebildet sein.

Bevorzugt wird das optische Element in dem Optikhalter fixiert, bevor der Optikhalter mit seinem Kontaktbereich auf dem Auflagebereich der Vertiefung gesetzt wird.

Zur Einstellung der vorbestimmten Positionierung gemäß Schritt d) kann ein Werkzeug (beispielsweise ein zangenartiges Werkzeug) verwendet werden.

Die Vertiefung in der Grundplatte kann insbesondere durch Fräsen hergestellt werden.

Bei dem erfindungsgemäßen Verfahren kann die Vertiefung gemäß der erfindungsgemäßen Optikanordnung (einschließlich sämtlicher Weiterbildungen) ausgebildet werden.

Das erfindungsgemäße Verfahren kann so weitergebildet werden, daß die erfindungsgemäße Optikanordnung bereitgestellt werden kann. Insbesondere kann das Verfahren so weitergebildet werden, daß auch die Weiterbildungen der Optikanordnung bereitgestellt werden können.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine schematische Draufsicht einer Ausführungsform der erfindungsgemäßen Optikanordnung;
- Fig. 2: eine vergrößerte schematische Schnittansicht eines in Figur 1 verwendeten Optikhalters;
- Fig. 3: eine schematische Perspektivdarstellung einer weiteren Ausführungsform der erfindungsgemäßen Optikanordnung, und
- Fig. 4: eine schematische Perspektivdarstellung einer Abwandlung der Optikanordnung gemäß Figur 3.

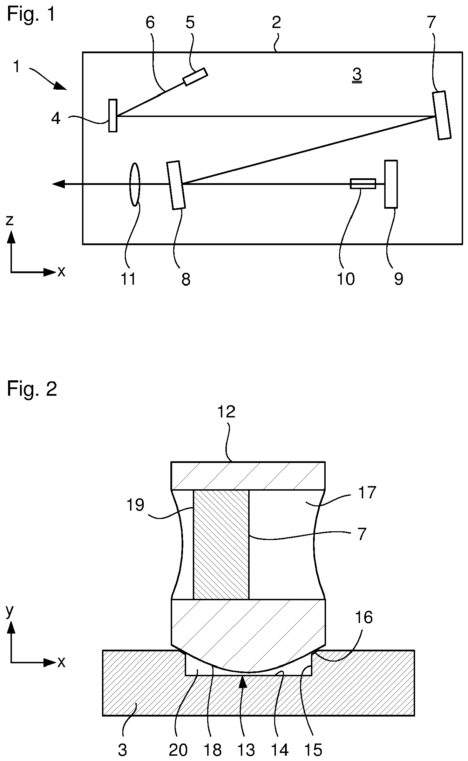

Bei der in Figur 1 gezeigten Ausführungsform ist die erfindungsgemäße Optikanordnung 1 als Laser 2 ausgebildet, der eine Grundplatte 3 aufweist, auf der die nachfolgend beschriebenen Optikelemente positioniert und soweit nötig, auch fixiert sind.

Der Laser 2 umfaßt ein aktives Medium 4 in Scheibenform, dessen Rückseite verspiegelt ist, so daß es gleichzeitig als Resonatorspiegel dient. Zum Pumpen des aktiven Mediums 4 ist eine Diodenlaserstrahlquelle 5 vorgesehen, die Pumpstrahlung 6 abgibt.

Der Resonator des Lasers 2 ist hier gefaltet ausgebildet, wobei zur Faltung zwei Spiegel 7, 8 vorgesehen sind und der Spiegel 8 gleichzeitig als Auskoppelspiegel dient. Ferner weist der Resonator noch einen Spiegel 9 auf, der auch als Endspiegel 9 bezeichnet werden kann. Zwischen den Spiegeln 8 und 9 ist ein Verdopplerkristall 10 angeordnet, der zur gewünschten Frequenzverdoppelung der erzeugten Laserstrahlung dient.

Ferner weist der Laser 2 noch eine Linse 11 auf, die zur Strahlformung der ausgekoppelten Laserstrahlung vorgesehen ist.

Bei der erfindungsgemäßen Optikanordnung 1 ist der Spiegel 7 in einem Optikhalter 12 gehaltert und mittels diesem hochgenau positioniert, wie nachfolgend in Verbindung mit Figur 2 beschrieben ist, in der eine vergrößerte Schnittansicht des Optikhalters 12 samt Spiegel 7 gezeigt ist.

Wie der Darstellung in Figur 2 zu entnehmen ist, weist die Grundplatte 3 eine zylindrische Sackbohrung 13 mit einem Boden 14 und einer Wandung 15 auf, wobei die Wandung 15 eine Fase 16 umfaßt. Die Fase 16 dient als Auflagebereich bzw. Lagerbereich für den Optikhalter 12.

Der Optikhalter 12 weist hier eine im Wesentlichen zylindrische Grundform mit einer Durchgangsbohrung 17 auf, in der der Spiegel 7 fixiert ist. Die Unterseite 18 des Optikhalters 12 ist kugelförmig ausgebildet und sitzt auf der Fase 16, die einen Auflagebereich der Sackbohrung 13 bildet. Die kugelförmigen Fläche der Unterseite 18 des Optikhalters 12 ist bevorzugt auf den Radius der Fase angepaßt und kann, muß aber nicht, abgesetzt ausgeführt werden. Insbesondere können die Fase 16 konkav gekrümmt und die Unterseite 18 konvex gekrümmt (oder umgekehrt) ausgebildet sein.

In dieser Art und Weise ist der Optikhalter 12 gelagert und kann um alle drei Raumachsen (x-, y- und z-Achse) gedreht werden, wobei der Drehpunkt durch den Krümmungsradius der kugelförmig ausgebildeten Unterseite 18 bestimmt ist. Bevorzugt ist der Drehpunkt so gewählt, daß er auf der Spiegelfläche 19 des Spiegels 7 liegt. Ferner kann er in die optische Achse des Resonatoraufbaus gelegt werden.

Die Fase kann, muß aber nicht, als abgesetzte Fase ausgeführt werden. Wenn die Fase 16 abgesetzt ausgebildet ist, sind die Abschnitte der Wandung 15, die neben den als Fase 16 ausgebildeten Abschnitten liegen, natürlich so ausgebildet, daß sie nicht in Kontakt stehen mit der Unterseite 18 des aufgesetzten Optikhalters 12. Diese Abschnitte können z. B. als zurückspringende Abschnitte ausgebildet sein, so daß die Unterseite 18 nur auf den die Fase 16 bildenden Abschnitten der Wandung 15 sitzt.

Um nun den Spiegel 7 zu positionieren, kann mit einem externen Werkzeug (nicht gezeigt), das beispielsweise zangenartig ausgebildet sein kann, der auf dem Auflagebereich sitzende Optikhalter 12 so um die drei Achsen gedreht werden, daß die vorbestimmte Positionierung des Spiegels 7 erreicht wird. Wenn die vorbestimmte Positionierung erreicht wird, wird der Optikhalter 12 in dieser Positionierung bzw. Stellung fixiert, so daß eine unerwünschte Dejustage sicher vermieden werden kann.

Die Fixierung wird mittels einer Klebeverbindung realisiert. So kann beispielsweise in dem Hohlraum 20 zwischen der Unterseite 18 des Optikhalters 12 und dem Boden 14 der Sackbohrung 13 ein Klebstoff eingefüllt sein, der bei Vorliegen der vorbestimmten Positionierung ausgehärtet wird. Das dabei üblicherweise auftretende Schrumpfen des Klebstoffes führt in vorteilhafter Weise dazu, daß aufgrund der auftretenden Zugkraft die Unterseite 18 des Optikhalters 12 gegen die Fase 16 der Sackbohrung 13 dauerhaft gedrückt wird. Dadurch entsteht neben der formschlüssigen Verbindung, die durch den Klebstoff selbst gebildet wird, zusätzlich eine kraftschlüssige Verbindung zwischen dem Auflagebereich der Unterseite des Optikhalters und der Fase der Sackbohrung. Dies gewährleistet eine dauerhaft dejustagefreie Fixierung des Optikhalters 12. Zusätzlich kann durch Löten oder Punktschweißen bzw. Punktlaserschweißen eine Verbesserung der Fixierung realisiert werden. Dabei wird z.B. im Bereich der Fase 15 die Lötung oder das Schweißen durchgeführt.

Ferner ist die Größe der Kontaktfläche zwischen der Unterseite 17 des Optikhalters 12 und der Grundplatte 3 äußerst gering, so daß eine gute thermische Trennung von Spiegel 7 und Grundplatte 3 vorliegt, was für den Betrieb des Lasers 2 ebenfalls von Vorteil ist.

Insgesamt ist der erfindungsgemäße Optikhalter 12 äußerst kompakt (geringe Abmessung im Vergleich zu bisher bekannten Optikhaltern, die justierbar sind) und kann mit geringen Kosten hergestellt werden.

Natürlich kann nicht nur der Spiegel 7 des Lasers 2 mittels des beschriebenen Optikhalters 12 justiert werden. Auch andere Elemente des Lasers 2 können in gleicher Weise justiert werden, wie zum Beispiel das aktive Medium 4, die anderen Spiegel 8 und 9, der Verdopplerkristall 10, die Diodenlaserstrahlquelle 5 sowie die Linse 11.

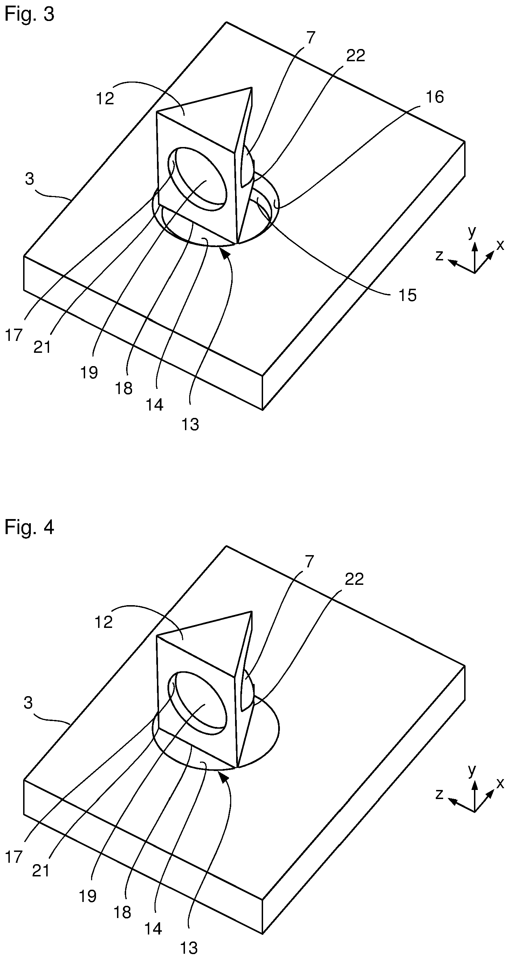

In Figur 3 ist eine zweite Ausführungsform des Optikhalters 12 gezeigt. In dieser Ausführungsform ist der Optikhalter 12 als gerades Prisma mit einem Dreieck als Grundfläche bzw. Unterseite 18 ausgebildet, so daß der Kontaktbereich des Optikhalters 12 durch die drei Ecken 21, 22 (in Figur sind nur zwei der drei Ecken sichtbar) der Unterseite 18 gebildet ist. Die drei Ecken weisen eine Fase auf, die dem Radius der Fase 16 entspricht

Der Spiegel 7 ist in gleicher Weise wie bei dem Optikhalter 12 von Fig. 2 in der Durchgangsbohrung 17 des Optikhalters fixiert.

Die Vertiefung 13 ist bei dem Ausführungsbeispiel gemäß Figur 3 in gleiche Weise wie bei dem Ausführungsbeispiel von Figur 2 ausgeführt. Es ist eine zylinderförmige Vertiefung 13 in die Grundplatte 3 gefräst, die einen Boden 14 und eine Wandung 15 aufweist, wobei die Wandung abgefast ist, so daß eine Fase 16 vorliegt, auf der die drei Ecken 21, 22 aufliegen. In einer nicht gezeigten Abwandlung kann sich die Fase 16 bis zum Boden 14 erstrecken.

Somit wird eine Dreipunktauflage verwirklicht, wodurch eine statisch bestmöglich bestimmte Auflage vorliegt. Auch bei der Ausführungsform von Figur 3 kann der Optikhalter 12 um alle drei Raumrichtungen (x-, y- und z-Richtung) gedreht werden, um die vorbestimmte Positionierung zu erreichen. Sobald die vorbestimmte Positionierung erreicht ist, kann der Optikhalter 12 wiederum fixiert werden.

Nachdem bei dieser Ausführungsform der Bereich zwischen der Unterseite 18 des Optikhalters 12 und dem Boden 14 der Vertiefung 13 einsehbar ist, kann zum Beispiel ein UV-Kleber zur Fixierung verwendet werden. Ein solcher UV-Kleber wird mit UV-Strahlung ausgehärtet.

Natürlich kann bei der Ausführungsform gemäß Figur 3 auch eine zusätzliche Fixierung mittels Löten oder Punktschweißen (insbesondere Punktlaserschweißen) verwirklicht werden.

Bei der Ausführungsform gemäß Figur 3 ist der Auflagebereich durch die Fase 16 ausgebildet. Natürlich sind auch andere Formen der Sackbohrung 13 möglich.

In Figur 4 ist eine Abwandlung gezeigt, bei der die Sackbohrung 13 hohlkugelförmig ausgebildet ist. Auch bei dieser Ausführungsform liegt die im Zusammenhang mit Figur 3 beschriebene Dreipunktauflage vor, so daß wieder um eine ausgezeichnete Positionierung erreichbar ist. Die Fixierung der gewünschten Position des Optikhalters 12 durch Aushärten des Klebers wird in gleicher Weise wie bei den bereits beschriebenen Ausführungsformen durchgeführt.

Zusätzlich zu der Fixierung mittels dem aushärtbaren Kleber im Hohlraum 20 zwischen der Unterseite 18 des Optikhalters 12 und dem Boden 14 der Sackbohrung 13 kann auch zwischen dem Auflage- und Kontaktbereich ein aushärtbarer Kleber angeordnet sein, der zu einer weiteren Verbesserung der dauerhaften Fixierung führt, wenn er nach Einstellung der gewünschten Positionierung des Optikhalters 12 ausgehärtet wird. Die Aushärtung kann z.B. mittels UV-Strahlung oder thermisch durchgeführt werden.

## Patentansprüche

1. Verfahren zum Justieren eines optischen Elementes, mit den Schritten:
a. Bereitstellen eines Optikhalters mit einer einen Kontaktbereich aufweisenden Unterseite und Bereitstellen einer Grundplatte mit einer Vertiefung, die eine einen Auflagebereich aufweisenden Wandung umfaßt, wobei Kontaktbereich und Auflagebereich so ausgebildet sind, daß der Optikhalter bei bestehendem Kontakt zwischen Kontakt- und Auflagebereich um mehr als eine Raumrichtung zum Einstellen einer gewünschten Positionierung drehbar ist, und ein Hohlraum zwischen der Unterseite des Optikhalters und einem Boden der Vertiefung vorliegt, wobei die Vertiefung als Sackloch ausgebildet ist,
b. Fixieren eines optischen Elementes in dem Optikhalter,
c. Einfüllen eines aushärtbaren Klebemittels in den Hohlraum,
d. Aufsetzen des Optikhalters mit seinem Kontaktbereich auf den Auflagebereich der Vertiefung,
e. Einstellen der gewünschten Positionierung durch Drehen des auf dem Auflagebereich sitzenden Optikhalters, und
f. Fixieren des Optikhalters in der gewünschten Positionierung durch Aushärten des Klebemittels, wobei beim Aushärten ein Schrumpfen stattfindet, wodurch der Kontaktbereich dauerhaft gegen den Auflagebereich gedrückt wird.

2. Verfahren nach Anspruch 1, bei dem im Schritt a) der Optikhalter und die Grundplatte so bereitgestellt werden, daß nach Durchführung des Schrittes f) die Fläche, in der der Kontaktbereich dauerhaft gegen den Auflagebereich gedrückt wird, kleiner ist als die vom Klebemittel benetzte Fläche der Unterseite des Optikhalters und/oder der Vertiefung.

3. Verfahren nach Anspruch 1 oder 2, bei dem im Schritt f) das Klebemittel durch Beaufschlagen mit UV-Strahlung ausgehärtet wird.

4. Verfahren nach einem der obigen Ansprüche, bei dem im Schritt a) der Auflagebereich und/oder der Kontaktbereich segmentiert ausgebildet werden/wird.

5. Verfahren nach einem der obigen Ansprüche, bei dem im Schritt a) der Optikhalter und die Grundplatte so bereitgestellt werden, daß der Optikhalter bei bestehendem Kontakt zwischen Kontaktbereich und Auflagebereich in genau drei Punkten auf dem Auflagebereich sitzt.

6. Verfahren nach einem der obigen Ansprüche, bei dem im Schritt f) das Klebemittel thermisch ausgehärtet wird.

7. Verfahren nach einem der obigen Ansprüche, bei dem zwischen dem Kontakt- und dem Auflagebereich ein zweites Klebemittel angeordnet wird, das nach dem Schritt e) ausgehärtet wird.

8. Verfahren nach einem der obigen Ansprüche, bei dem der Auflagebereich als Fase der Vertiefung ausgebildet wird.

9. Verfahren nach einem der obigen Ansprüche, bei dem der Kontaktbereich als Teil oder Teile einer Kugel ausgebildet ist.

## Claims

1. A method for adjusting an optical element, comprising the steps of:
a. providing an optical holder having a contact area having an underside and providing a base plate having a recess comprising a wall having a support portion, said contact area and support area are formed such that in existing contact between the contact and support area the optical holder is rotatable by more than one spatial direction for setting a desired positioning, and a cavity between the underside of the optical holder and a bottom of the recess is present, wherein the recess is formed as a blind hole,
b. fixing an optical element in the optical holder,
c. filling a curable adhesive into the cavity,
d. placing the optical holder with its contact area on the support area of the recess,
e. adjusting the desired positioning by rotating the optical holder on the support area, and
f. fixing the optical holder in the desired positioning by curing the adhesive, wherein a shrinking occurs during curing, whereby the contact area is pressed permanently against the support area.

2. A method of claim 1, wherein in step a) the optical holder and the base plate are provided such that after performing step f) the area in which the contact area is permanently pressed against the support area, is smaller than that of the adhesive wetted surface of the underside of the optical holder and/or the recess.

3. A method of claim 1 or 2, wherein in step f) the adhesive is cured by exposure to UV radiation.

4. A method according to any one of the above claims, wherein in step a) the support area and/or the contact area is formed as segments.

5. A method according to any one of the above claims, wherein in step a) the optical holder and the base plate are provided such that the optical holder sits in existing contact between the contact area and the support area in exactly three points on the support area.

6. A method according to any one of the preceding claims, wherein in step f) the adhesive is thermally cured.

7. A method according to any one of the preceding claims, wherein between the contact and the support area, a second adhesive is arranged, which is cured after step e).

8. A method according to any one of the above claims, wherein the support area is formed as a chamfer of the recess.

9. A method according to any one of the preceding claims, wherein the contact area is formed as part or parts of a sphere.

## Revendications

1. Procédé de réglage d'un élément optique, comprenant les étapes :
a. de fourniture d'un support optique comportant un côté inférieur présentant une zone de contact et de fourniture d'une plaque de base comportant un évidement qui comprend une paroi comportant une zone d'appui, la zone de contact et la zone d'appui étant conçues de manière que le support optique puisse tourner autour de plus d'une direction spatiale pour ajuster un positionnement souhaité en cas de contact entre la zone de contact et la zone d'appui, et qu'il existe une cavité entre le côté inférieur du support optique et un fond de l'évidement, l'évidement étant réalisé sous la forme d'un trou borgne,
b. de fixation d'un élément optique dans le support optique,
c. de remplissage de la cavité d'un adhésif durcissable,
d. de mise en place du support optique avec sa zone de contact sur la zone d'appui de l'évidement,
e. d'ajustement de la position souhaitée par la rotation du support optique reposant sur la zone d'appui, et
f. de fixation du support optique dans la position souhaitée par durcissement de l'adhésif, un rétrécissement se produisant pendant le durcissement, ce qui entraîne le pressage permanent de la zone de contact contre la zone d'appui.

2. Procédé selon la revendication 1, dans lequel, à l'étape a), le support optique et la plaque de base sont prévus de sorte qu'après la réalisation de l'étape f), la surface dans laquelle la zone de contact est pressée en permanence contre la zone d'appui est plus petite que la surface du côté inférieur du support optique et/ou de l'évidement humecté par l'adhésif.

3. Procédé selon la revendication 1 ou 2, dans lequel, à l'étape f), l'adhésif est durci par exposition au rayonnement ultraviolet.

4. Procédé selon l'une des revendications précédentes, dans lequel, à l'étape a), la zone d'appui et/ou la zone de contact sont réalisées de manière segmentée.

5. Procédé selon l'une des revendications précédentes, dans lequel, à l'étape a), le support optique et la plaque de base sont prévus de sorte que le support optique repose en exactement trois points sur la zone d'appui en cas de contact entre la zone de contact et la zone d'appui.

6. Procédé selon l'une des revendications précédentes, dans lequel, à l'étape f), l'adhésif est durci thermiquement.

7. Procédé selon l'une des revendications précédentes, dans lequel un second adhésif est disposé entre la zone de contact et la zone d'appui et est durci après l'étape e).

8. Procédé selon l'une des revendications précédentes, dans lequel la zone d'appui est réalisée sous la forme d'un chanfrein de l'évidement.

9. Procédé selon l'une des revendications précédentes, dans lequel la zone de contact est réalisée sous la forme d'une partie ou des parties d'une sphère.
